# EUROPÄISCHE PATENTSCHRIFT

(11) **EP 2 097 710 B1**
(45) Veröffentlichungstag und Bekanntmachung des Hinweises auf die Patenterteilung: **27.01.2010**
(21) Anmeldenummer: 07819147.5
(22) Anmeldetag: 19.10.2007
(51) Int. Cl.: F41A 21/32, F41G 3/12, G01S 13/58

(54) **VERFAHREN ZUR MESSUNG DER MÜNDUNGSGESCHWINDIGKEIT EINES PROJEKTILS ODER DERGLEICHEN**
METHOD FOR MEASUREMENT OF THE MUZZLE VELOCITY OF A PROJECTILE OR THE LIKE
PROCÉDÉ DE MESURE DE LA VITESSE DE SORTIE D'UN PROJECTILE OU SIMILAIRE

(30) Priorität: 08.12.2006 DE 102006058375
(43) Veröffentlichungstag der Anmeldung: 09.09.2009
(73) Patentinhaber: Rheinmetall Air Defence AG, 8050 Zürich (CH)
(72) Erfinder: FRICK, Henry, 8442 Hettlingen (CH)
(74) Vertreter: Dietrich, Barbara
(86) Internationale Anmeldenummer: PCT/EP2007/009082
(87) Internationale Veröffentlichungsnummer: WO 2008/067876

(56) Entgegenhaltungen:
- EP-A- 0 023 365
- US-A- 2 691 761
- US-A- 2 824 284

## Beschreibung

Bekannte Messeinrichtungen bzw. -methoden benutzen wenigstens ein Spulenpaar, welches in der Regel nach einer Mündungsbremse einer Waffe angebracht ist. Die Spulen sind dabei in einem definierten Abstand zueinander positioniert, wobei die Geschwindigkeit V₀ durch die gemessene Zeit, welche das Projektil benötigt, um die durch die Spulen definierte Strecke zurückzulegen, ermittelt wird.

Eine derartige Einrichtung ist aus der CH 691 143 A5 bekannt. Zur Messung der Geschossgeschwindigkeit sind an der Mündung eines Waffenrohres eines Geschützes hoher Kadenz zwei Sensoren in einem Abstand voneinander an einem Tragrohr angeordnet. Diese, auf Veränderung eines magnetischen Flusses ansprechenden Sensoren, stehen mit einer Auswerteelektronik in Verbindung und weisen ein Spulenpaar, bestehend aus zwei Spulen und einen geschlossenen magnetischen Kreis, auf. Die gemessene Geschossgeschwindigkeit oder die damit aktualisierte Zünderstellzeit wird dann in der Regel vor Austritt des Geschosses aus dem Mündungsbereich dem Geschoss als Information mitgegeben.

In der DE 697 09 291 T2 (EP 0 840 087 B1) werden Mittel zur Steuerung der Anfangsgeschwindigkeit eines Geschosses offenbart. Dabei ist ein Sensormittel vorgesehen, das einen auf die Mündungsgeschwindigkeit bezogenen Parameter messen kann. Dies erfolgt mit Hilfe der zumindest im bzw. am Waffenlauf angebrachten Sensoren, die einen höheren Druck im Waffenlauf aufnehmen können, welcher sich durch das Erhitzen der Treibgase am Waffenrohr einstellt. Als Sensoren werden Dehnungsmessstreifen vorgeschlagen, die so angepasst sind, dass sie Kontakt mit dem Waffenlauf haben. Dabei wird die Ausdehnung des Waffenlaufs gemessen. Aus der zeitlichen Differenz zwischen der Registrierung der Projektilpassage durch die beiden einzelnen Sensoren werden die Bewegung und damit die Geschwindigkeit des Projektils ermittelt.

Die DE 103 52 047 A1 schlägt vor, wenigstens zwei voneinander beabstandete Sensoren am bzw. direkt im Waffenrohr zu integrieren. Beim Geschossdurchgang erfahren die Sensoren auf Grund des Gasdrucks am Geschossboden eine Ausdehnung, welche in ein elektrisches Signal umgewandelt und wenn nötig nach Verstärkung einer nachgeschalteten Signalverarbeitung zugeführt wird. Als Sensoren werden vorzugsweise Quarzsensoren in Form von Längsmessdübel verwendet, die entweder in einem Trägerring am bzw. um das Waffenrohr oder direkt im Waffenrohr angebracht sind. Die Quarzsensoren haben den großen Vorteil, dass sie bereits kleinste Druckänderungen in Signale umwandeln können, selber sehr robust aufgebaut sind und passgenau, d.h., in festem Kontakt unverrutschbar zum Waffenrohr integriert werden kann. Mechanische Belastungen des Waffenrohres haben dadurch keine Auswirkungen auf das Messergebnis der indirekten Druckmessung. Die Sensoren werden zudem nicht direkt dem Gasdruck ausgesetzt und zusätzlich zum vorhandenen Gehäuse in einer festen Struktur eingebaut.

Die DE 10 2005 024 179 A1 hingegen verzichtet ganz auf eine Messung einer direkten Messung der aktuellen Mündungsgeschwindigkeit, da die reale Mündungsgeschwindigkeit durch Information der aktuellen Fluggeschwindigkeit des Geschosses bestimmt wird, d.h., aus dieser zurückgerechnet wird. Anhand dieser aktuellen Geschossgeschwindigkeit wird dann die Zündzeit des Geschosses mit Hilfe einer Norm-Mündungsgeschwindigkeit voreingestellte Zündzeit korrigiert und als aktuelle Zünderstellzeit verwendet. Zur Übertragung dieser Information an das Geschoss dient ein Mikrowellensender, vorzugsweise im GHz-Bereich, der die aktuelle, beispielsweise von einem Feuerleitrechner bestimmte Tempierung an die Munition bzw. ein Geschoss sendet.

Eine weitere Methode besteht darin, das Rohr als runden Hohleiter zu betreiben und die Dopplergeschwindigkeit des Projektils im Rohr zu messen, wie in der EP 0 023 365 A2 nachlesbar, die eine Grundlage für den Oberbegriff der Ansprüche 1 und 6 bildet. Die Frequenz des Signals liegt dabei über der Grenzfrequenz für den betreffenden Hohleiter-Mode. Die sich dabei aufbauende elektromagnetische Welle breitet sich im Rohr aus und wird vom Projektil reflektiert. Zudem ergibt sich eine, von der momentanen Geschwindigkeit abhängige Dopplerfrequenzverschiebung.

Nachteilig dabei ist, dass sich zwei Sensoren in einem definierten Abstand befinden müssen. Diese Konstruktion verlängert die Messeinrichtung an der Mündung des Waffenrohres. Dies kann zur Instabilität der gesamten Waffen führen oder Probleme bei Benutzung von Unterkalibermunition verursachen. Die sich beim Austritt aus dem Waffenrohr lösenden Treibspiegel können die Messeinrichtung beschädigen. Des. Weiteren müssen die Sensoren direkt im Waffenlauf oder darauf befestigt werden. In vielen Fällen ist der Lieferant des Waffenrohres und der Lieferant der Mündungsgeschwindigkeitsmess-Einrichtung nicht derselbe. Dies führt dazu, dass das Anbringen der Sensoren am oder im Rohr nur unter erschwerten Bedingungen möglich oder gar unmöglich ist. Eine Mündungsgeschwindigkeitsmess-Einrichtung sollte vom benutzten Waffenrohr unabhängig funktionieren, ohne Eingriff in das Waffenrohr selbst. Ein weiterer Nachteil ergibt sich dadurch, dass die Messungen der Fluggeschwindigkeit und die Programmierung der Zündzeit außerhalb des Waffenrohres mittels eines Mikrowellensenders eine gewisse Störfestigkeit der Informationsübertragung zwischen Sender und Geschoss fordert. Störungen natürlicher Art, wie auch bewusste Störungen durch einen Störsender können die Messung der Fluggeschwindigkeit und die danach folgenden Programmierung behindern bis unmöglich machen. Zudem lässt sich die Emission des Senders durch externe Methoden der "Elektronischen Kriegsführung" detektieren und den Standpunkt des Geschützes orten. Somit ist der Standort des Geschützes dem Gegner bekannt und dieser wird Gegenmaßnahmen zur Bekämpfung des Geschützes einleiten. In der heutigen Zeit gilt "Sehen aber nicht gesehen werden". Verrät das Geschütz seinen Standort durch Emissionen, ist dieses Geschütz durch effiziente Waffensysteme höchst gefährdet. Zudem werden bei der Messung der Dopplerfrequenzverschiebung gewisse Anforderungen an die Stabilität des Oszillators gestellt. Vibrationen, die durch die Schussabgabe entstehen, können die momentane Frequenz des Senders verändern und den Aufwand zur genauen Messung der Frequenzverschiebung erhöhen. Zudem wirkt das Waffenrohr als offener runder Hohlleiter und kann als Antenne wirken. Dies bedeutet, dass eine externe Abhorcheinrichtung die Emissionen detektieren und den Standort des Geschützes bestimmen kann.

Die Erfindung stellt sich die Aufgabe, eine gleichfalls berührungslose Messung der Mündungsgeschwindigkeit aufzuzeigen, welche die letztgenannten Mängel nicht mehr aufweiset.

Gelöst wird die Aufgabe durch die Merkmale des Patentanspruchs 1. Vorteilhafte Ausführungen sind in den Unteransprüchen aufgeführt.

Der Erfindung liegt die Idee zugrunde, das Waffenrohr bzw. das Abschussrohr und/oder Teile der Mündungsbremse ebenfalls als Hohleiter zu nutzen (als Hohlleiter gilt ein Rohr mit einer charakteristischen Querschnittsform, das eine sehr gut elektrisch leitende Wand besitzt. Technisch weit verbreitet sind vor allem Rechteck- und Rund-Hohlleiter), welche jedoch unter der Grenzfrequenz des betreffenden Hohlleiter-Mode betrieben werden. (Grundlagen dazu siehe http://people.ee.ethz.ch/∼kkrohne/AMIV/Wellenleiter.pdf, S. 24 - 33 oder auch http://prp0.prp.physik.tu-darmstadt.de/∼eiakobi/Mikrowel.pdf, auf die hiermit Bezug genommen wird). Im derart betriebenen Hohlleiter kann sich keine elektromagnetische Welle ausbreiten und somit findet kein Energietransport entlang des Hohlleiters statt. Das elektromagnetische Feld nimmt exponentiell in Richtung des Hohlleiters ab, was nicht auf einer ohmschen Dämpfung basiert, sondern sich als Lösung der Maxwell-Gleichungen ergibt.

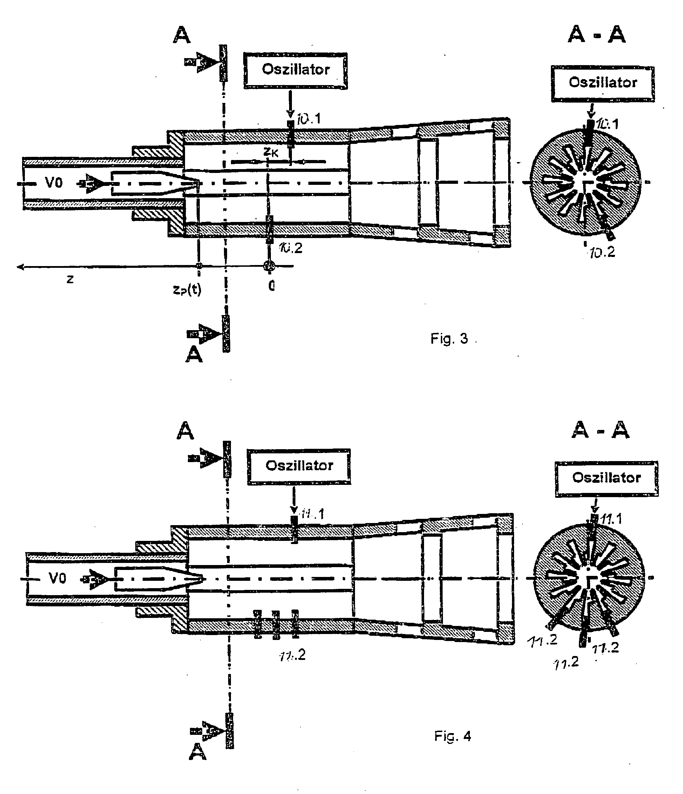

Das elektromagnetische Feld muss dabei der Randbedingung für einen runden Hohlleiter und der Randbedingung am Projektil genügen. Dabei ist zu beachten, dass der runde Hohlleiter nicht zwingend einen exakt kreisförmigen Querschnitt aufweisen muss. Vielmehr kann auch ein Profil in die Wand des Hohlleiters eingearbeitet sein, um eine gewünschte transversale elektromagnetische Feldverteilung zu erzielen. Dies ist in Fig. 3 zu sehen, wie eine Rippenstruktur in der Mündungsbremse für die Modenselektion sorgt. Bei Erfüllung aller Randbedingungen ergibt sich eine Signalstärke am Ort z = 0 (wenn Z_{K} = 0 ist), welche nun von der Position z = z_{P ,} des Projektils im Hohlleiter bestimmt wird. Der Versatz Z_{K} zwischen Sende-Koppler (10.1) und Empfangs-Koppler (10.2) kann zu besseren Modenselektionen, wenn nötig, dienen. Im Allgemeinen soll aber Z_{K} = 0 sein, und gilt nur für den Empfangs-Koppler, der am nächsten zum Sende-Koppler (10.1) ist. Die gezeigte Situation in Fig. 3 zeigt eine Anordnung bestehend aus einem Sende-Koppler (10.1) und einem Empfangs-Koppler (10.2). Es können aber auch mehrere Empfangs-Koppler (11.2), wie in Fig. 4 zu sehen, in Serie, sehr nahe zu- 4 einander und somit kompakt in Richtung Rohrende und vor dem Sende-Koppler (11.1) angebracht werden, um die Messgenauigkeit zu erhöhen. Die Mündungsbremse wird dabei nicht künstlich verlängert und somit wird der Nachteil einer langen MündungsgeschwindigkeitsMess-Einrichtung verhindert.

Die Messvorrichtung wird gebildet durch das Geschützrohr oder einer anderen röhrenförmigen Abschussvorrichtung, dem Projektil, dem Mündungsbereich des Rohres, beispielsweise einer Mündungsbremse sowie wenigstens einem Oszillator, einem Sende-Koppler und im Minimum einem Empfangs-Koppler oder mehreren Empfangs-Kopplern, wobei die Anzahl abhängig von der gewünschten Messgenauigkeit der Messvorrichtung ist.

Vorteil dieser einfachen Messvorrichtung ist, dass der Mündungsbereich bzw. die Mündungsbremse nicht künstlich verlängert werden muss. Die Messvorrichtung ist direkt in der Mündungsbremse integriert. Zudem kann sie unabhängig vom Munitionstyp (Voll- oder Unterkaliber) verwendet werden. Die Messvorrichtung ist kompakt, da das Rohr und der Mündungsbereich, insbesondere die in der Regel am Geschützrohr verwendete Mündungsbremse mit zum Messaufbau dazu gehören. Die Genauigkeit der Messung selbst ist unabhängig von der Oszillatorfrequenz, so dass keine hohe Frequenzstabilität an den verwendeten Oszillator gestellt werden muss, wie bei der bekannten Dopplerfrequenzmessungen. Nur eine untere und eine obere Frequenz sollte nicht unter- bzw. überschritten werden. Die einfache Messung ergibt sich zudem dadurch, dass nicht die Frequenz, sondern die Umhüllende erfasst wird. Die Messvorrichtung ist im Singlemode betreibbar.

Anhand eines Ausführungsbeispiels mit Zeichnung soll die Erfindung näher erläutert werden.

Es zeigt:
- Fig. 1: eine prinzipielle Messvorrichtung zur Messung der Mündungsgeschwindigkeit eines Projektils;
- Fig. 2: eine schematische Darstellung des begrenzten, runden Hohlleiters nach Fig. 1;
- Fig. 3: eine Darstellung der Messsektion, integriert in die Mündungsbremse sowie ausgestattet mit einer Rippenstruktur für die Modenselektion;
- Fig. 4: eine Darstellung aus Fig. 3 mit mehreren Kopplern.

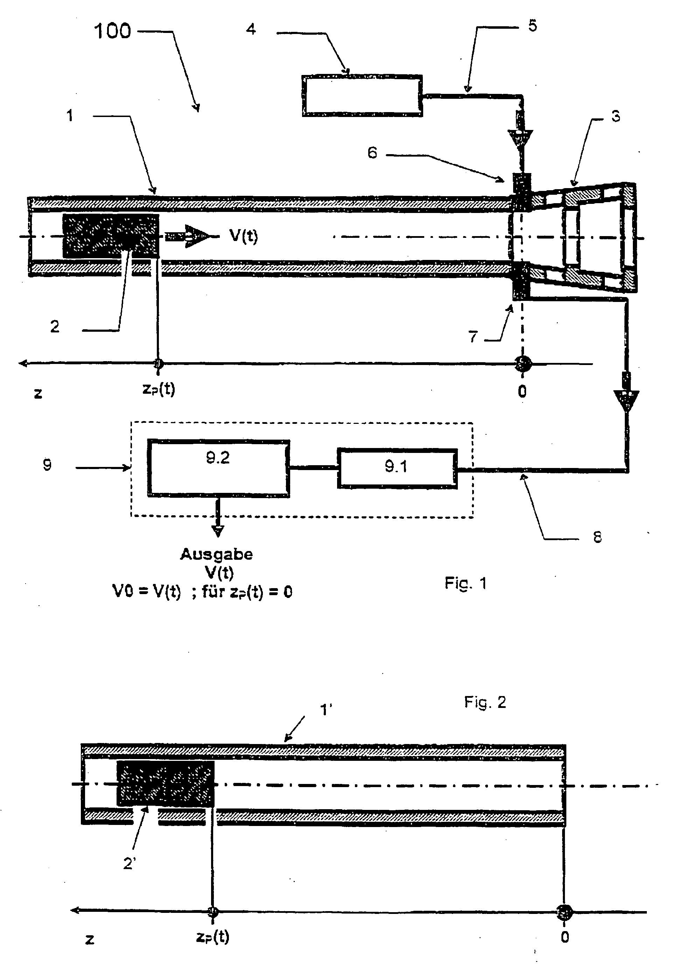

In den Fig. 1 und 2 ist der Grundaufbau einer Messvorrichtung 100 für das Messverfahren dargestellt. Die Messvorrichtung 100 umfasst ein Geschützrohr 1, hier mit einer Mündungsbremse 3, einen Oszillator 4, welcher über eine Signalzuführung 5 mit einem Sende-Koppler 6 zur Anregung elektrisch verbunden ist. Ein Empfangs-Koppler 7 dient zur Signalaufnahme und ist über eine Kabel 8 für das Empfangssignal mit einer Empfangseinheit 9, bestehend aus einem Detektor 9.1 und einer Signalverarbeitung 9.2 verbunden. Beide Koppler 6, 7 sind in die Mündungsbremse 3 integriert und bilden ein Kopplerpaar.

Der Oszillator 4 regt dabei über den Sende-Koppler 6 einen Hohlleiter-Mode an (TE; TM). Dabei ist in diesem Ausführungsbeispiel vorgesehen, dass eine Frequenz gewählt wird, welche sich unter der Grenzfrequenz des betreffenden Hohlleiter-Mode befindet. Der gewünschte Hohleiter-Mode wird durch mechanische und elektromagnetische Modenselektion angeregt. Durch das System 'Rohr' 1 (Fig. 2 Hohlleiter 1') und dem Projektil 2 (Fig. 2 Zylinder 2') ergibt sich die Signalstärke am Ort z = 0, welches von der Position z = z_{P} des Projektils 2 abhängig ist. Der Empfangs-Koppler 7, hier ein Pick-up-Sensor, nimmt dieses Signal auf, welches zur Empfangseinheit 9 geleitet wird.

Wie bereits ausgeführt, wird die Messvorrichtung 100 bei einem ausgewählten Hohlleiter-Mode unter der Grenzfrequenz dieses Hohlleiter-Modes (below cutoff frequency) des Hohlleiters oder eines Stück Hohlleiter, welcher in der Mündungsbremse integriert ist, betrieben. Es ist nicht nur der Grundmode, sondern auch höhere Hohlleiter-Moden möglich. Unterschieden wird zwischen transversal elektrischen (TE) und transversal magnetischen (TM) - Moden. Beide Moden sind auch hier nutzbar.

Anhand der Fig. 2 wird das Grundprinzip der Messmethode etwas näher betrachtet. Wird der runde Hohleiter 1' mit dem zylindrischen Zapfen 2' begrenzt, so muss das elektromagnetische Feld einerseits die Randbedingungen an den Hohlleiterwänden und andererseits die Randbedingungen am Zylinderboden erfüllen. Es gilt, dass die Wände und der Zylinderboden ideal leitend sind. Das bedeutet, dass die tangentiale Komponente der elektrischen Feldstärke an diesen Oberflächen "E = 0 V/m" (Null) ist und dass die normale Komponente der magnetischen Induktion an diesen Oberflächen "B = 0 T" (Null) ist. Dies kann erreicht werden mit der Einführung von zwei Feldanteilen: das ursprüngliche elektromagnetische Feld, welches nur die Randbedingungen an den Wänden erfüllt und einem zusätzlichen Anteil, welcher dieselbe transversale Verteilung wie das ursprüngliche Feld besitzt und somit auch die Randbedingungen an den Wänden erfüllt. Der ursprüngliche Feldanteil wird am Ort z = 0 angeregt. Die Frequenz liegt unter der Grenzfrequenz für den gewählten Hohlleiter-Mode. Um die Randbedingungen am Zylinderboden z = z_{P} zu erfüllen, wird ein zweiter Feldanteil erzeugt, welcher durch Überlagerung die tangentiale Komponente der elektrischen Feldstärke und die normale Komponente der magnetischen Induktion des ursprünglichen Feldes aufheben. Die Superposition beider Anteile ergibt am Ort z = 0 eine Signalstärke, die abhängig ist von der Position des Zylinderbodens am Ort z = z_{P}.

Wird nun der zeitliche Verlauf der Signalstärke am Ort z = 0 analysiert, so kann auch auf eine Mündungsgeschwindigkeit V₀ geschlossen werden.

Wie in Fig. 3 zu sehen, kann der gewünschte Hohlleiter-Mode durch mechanische Konstruktionsmaßnahmen, hier zum Beispiel mit einer Rippenstruktur an der Hohlleiterwand, angeregt werden. Zudem wird mit der Art der Anregung mit dem Sende-Koppler 10.1 die Modenselektion unterstützt. In Fig. 3 ist der Hohlleiter als Teil der Mündungsbremse gezeigt. Der Versatz Z_{K} zwischen Sende-Koppler 10.1 und Empfangs-Koppler 10.2 kann zu besseren Modenselektion, wenn nötig, dienen. Im Allgemeinen soll aber ZK = 0 sein, und gilt nur für den Empfangs-Koppler, der am nächsten zum Sende-Koppler 10.1 ist.

In Fig. 4 wird gezeigt, wie mit mehreren Empfangs-Kopplern 11.2, die Messgenauigkeit erhöht wird. Zu beachten ist, dass der am weitesten vom Rohrende entfernten Empfangs-Koppler 11.2 in selber Entfernung zum Rohrende wie der Sende-Koppler 11.1 ist. Dies bedeutet, dass nach dem Sende-Koppler 11.1 keine Empfangs-Koppler 11.2 zu positionieren sind.

Die Mängel der vorher genannten Methoden nach dem Stand der Technik werden durch die hier vorgeschlagene Messeinrichtung aufgehoben durch folgende Eigenschaften:
- die Koppler (Sende-Koppler und Empfangs-Koppler) sind sehr nahe zueinander zu positioniert und somit in der Mündungsbremse (3) zu integrieren. Eine Verlängerung an der Mündungsbremse ist nicht nötig. Zudem können die Koppler auch im Rohr installiert werden, wenn dies möglich ist.
- die Messeinrichtung wird nur in der Mündungsbremse (Fig. 3) integriert, wenn es im Waffenrohr nicht möglich ist. Somit ist die Messeinrichtung unabhängig vom Rohr und somit auch vom Lieferanten des Rohres.
- die Messung findet innerhalb der Mündungsbremse oder Rohr statt und somit wird eine höhere Störfestigkeit erzielt.
- der Hohlleiter wird unter der Grenzfrequenz betrieben und durch die Länge des Hohlleiters werden auch die Emissionen nach außen minimiert.
- an den Oszillator werden keine hohen Anforderungen bezüglich Stabilität gestellt, da keine Dopplerfrequenzmessung nötig ist.

## Patentansprüche

1. Verfahren zur Messung der Mündungsgeschwindigkeit eines Projektils (2) oder dergleichen an einem Waffen- bzw. Abschussrohr (1) oder an der Mündungsbremse (3), wobei das Rohr (1) oder die Mündungsbremse (3) als Hohlleiter genutzt wird, **dadurch gekennzeichnet, dass** der Hohlleiter unter der Grenzfrequenz des betreffenden Hohlleiter-Modes (TE; TM) betrieben wird.

2. Verfahren nach Anspruch 1, **dadurch gekennzeichnet, dass** die momentane Projektilgeschwindigkeit V(t) kontinuierlich gemessen und abgespeichert werden kann.

3. Verfahren nach Anspruch 1 oder 2, **dadurch gekennzeichnet, dass** der Projektilgeschwindigkeitsverlauf im Hohlleiter über die Zeit (t) bestimmt ist.

4. Verfahren nach einem der Ansprüche 1 bis 3, **dadurch gekennzeichnet, dass** während das Projektil (2) sich im Hohlleiter bewegt und bevor das Projektil 2 den Hohlleiter verlässt, eine Voraussage über die Geschwindigkeit (V_{O}) getroffen werden kann.

5. Verfahren nach einem der Ansprüche 1 bis 4, **dadurch gekennzeichnet, dass** als Auswertezeit jener Zeitpunkt gewählt wird, bei dem das Projektil genau an der Stelle des Empfang- Kopplers ist, wobei das zu messende Signal zu Null wird oder ein anderes charakteristisches Verhalten aufweist, so dass dann die Geschwindigkeit (V_{O}) gemessen werden kann.

6. Messvorrichtung (100) zur Durchführung des Verfahrens nach einem der Ansprüche 1 bis 5, umfassend
- ein Waffen- bzw. Abschussrohr (1),
- eine Mündungsbremse oder dergleichen (3),
- einen Signalerzeuger (4), welcher
- über eine Signalzuführung (5) mit wenigstens einem Sende-Koppler (6, 10.1, 11.1) zur Anregung des Waffen- bzw. Abschussrohr (1) elektrisch verbunden ist, und
- eine Empfangsleitung (8) zur Weiterleitung der gemessenen Signale an wenigstens einem Empfangs-Koppler (7, 10.2, 11.2,) an eine Auswerteeinrichtung (9).

7. Messvorrichtung nach Anspruch 6, **dadurch gekennzeichnet, dass** der Signalerzeuger (4) einen Träger im Dauerstrich-Betrieb (CW-Betrieb) erzeugt.

8. Messvorrichtung nach Anspruch 6, **dadurch gekennzeichnet, dass** der Signalerzeuger (4) ein moduliertes Signal erzeugt.

9. Messvorrichtung nach einem der Ansprüche 6 bis 8, **dadurch gekennzeichnet, dass** der Signalerzeuger (4) ein Oszillator ist.

## Claims

1. Method for measurement of the muzzle velocity of a projectile (2) or the like adjacent to a weapon or firing barrel (1) or adjacent to the muzzle brake (3), with the barrel (1) or the muzzle brake (3) being used as a waveguide, **characterized in that** the waveguide is operated below the cutoff frequency of the relevant waveguide mode (TE; TM).

2. Method according to Claim 1, **characterized in that** the instantaneous projectile velocity V(t) can be measured and stored continuously.

3. Method according to Claim 1 or 2, **characterized in that** the projectile velocity profile in the waveguide is determined over the time (t).

4. Method according to one of Claims 1 to 3, **characterized in that** a prediction of the velocity (V₀) can be made while the projectile (2) is moving in the waveguide and before the projectile (2) leaves the waveguide.

5. Method according to one of Claims 1 to 4, **characterized in that** the evaluation time is chosen to be that time at which the projectile is precisely at that point of the reception coupler where the signal to be measured tends to zero or has some other characteristic response, such that the velocity (V₀) can then be measured.

6. Measurement apparatus (100) for carrying out the method according to one of Claims 1 to 5, having
- a weapon or firing barrel (1),
- a muzzle brake or the like (3),
- a signal generator (4), which
- is electrically connected via a signal supply (5) to at least one transmission coupler (6, 10.1, 11.1) for excitation of the weapon or firing barrel (1), and
- a receiving line (8) for passing on the measured signals at at least one reception coupler (7, 10.2, 11.2) to an evaluation device (9).

7. Measurement apparatus according to Claim 6, **characterized in that** the signal generator (4) generates a carrier in the continuous-wave mode (CW mode).

8. Measurement apparatus according to Claim 6, **characterized in that** the signal generator (4) generates a modulated signal.

9. Measurement apparatus according to one of Claims 6 to 8, **characterized in that** the signal generator (4) is an oscillator.

## Revendications

1. Procédé de mesure de la vitesse de sortie d'un projectile (2) ou similaires hors d'un tube d'arme ou de tir (1) ou sur le frein de bouche (3), le tube (1) ou le frein de bouche (3) étant utilisés comme conducteur creux,
**caractérisé en ce que**
le conducteur creux est conduit à la fréquence limite du mode de conducteur creux (TE; TM) concerné.

2. Procédé selon la revendication 1, **caractérisé en ce que** la vitesse instantanée V(t) du projectile peut être mesurée et conservée en mémoire en continu.

3. Procédé selon les revendications 1 ou 2, **caractérisé en ce que** l'évolution en fonction du temps (t) de la vitesse du projectile dans le conducteur creux est déterminée.

4. Procédé selon l'une des revendications 1 à 3, **caractérisé en ce que** pendant que le projectile (2) se déplace dans le conducteur creux et avant que le projectile (2) quitte le conducteur creux, une prédiction peut être prise sur sa vitesse (V₀).

5. Procédé selon l'une des revendications 1 à 4, **caractérisé en ce que** comme instant d'évaluation, on sélectionne l'instant auquel le projectile se trouve exactement à l'emplacement du coupleur de réception et le signal à mesurer est nul ou présente un autre comportement caractéristique, de sorte que la vitesse (V₀) peut alors être mesurée.

6. Dispositif de mesure (100) destiné à exécuter le procédé selon l'une des revendications 1 à 5, et comprenant :
- un tube d'arme ou de tir (1),
- un frein de bouche ou similaires (3),
- un dispositif (4) de formation de signaux qui
- est relié électriquement à une amenée de signaux (5) qui présente au moins un coupleur d'émission (6, 10.1, 11.1) destiné à exciter le tube d'arme ou de tir (1) et
- un conducteur de réception (8) qui transmet les signaux de mesure à au moins un coupleur de réception (7, 10.2, 11.2) à un dispositif d'évaluation (9).

7. Dispositif de mesure selon la revendication 6, **caractérisé en ce que** le formateur (4) de signaux forme une porteuse en forme d'onde continue (mode CW).

8. Dispositif de mesure selon la revendication 6, **caractérisé en ce que** le formateur (4) de signaux forme un signal modulé.

9. Dispositif de mesure selon l'une des revendications 6 à 8, **caractérisé en ce que** le formateur (4) de signaux est un oscillateur.
